# EUROPÄISCHE PATENTSCHRIFT

(11) **EP 1 393 618 B1**
(45) Veröffentlichungstag und Bekanntmachung des Hinweises auf die Patenterteilung: **13.12.2006**
(21) Anmeldenummer: 03018501.1
(22) Anmeldetag: 15.08.2003
(51) Int. Cl.: A01G 9/14, A01G 31/06

(54) **Lagerungsplattform zum Lagern und Bewässern von Pflanzen sowie Bewässerungsvorrichtung**
Storage tray for storing and watering plants, and watering device
Palette de stockage pour entreposer et irriguer des plantes, et dispositif d'irrigation

(30) Priorität: 30.08.2002 DE 20213719 U
(43) Veröffentlichungstag der Anmeldung: 03.03.2004
(73) Patentinhaber: Korte, Hermann, Dipl.-Ing., 26903 Surwold (DE)
(72) Erfinder: Korte, Hermann, Dipl.-Ing., 26903 Surwold (DE); Schomaker, Rudolf, 49751 Sögel (DE); Trinczek, Reinhold, 21493 Grabau (DE)
(74) Vertreter: Philipp, Matthias

(56) Entgegenhaltungen:
- EP-A- 0 445 320
- DE-U- 29 816 219
- NL-C- 1 015 602
- US-A- 2 952 096
- US-A- 3 772 827
- US-A- 5 673 511
- US-A- 5 987 812
- US-B1- 6 243 985

## Beschreibung

Die Erfindung betrifft eine Lagerungsplattform zum Lagern, Bewässern und Transportieren von Pflanzen, die wannenartig ausgebildet ist und mindestens einen Überlauf zum Vorgeben eines gewünschten Flüssigkeitspegels aufweist, sowie eine damit gebildete Bewässerungsvorrichtung.

Bekannte Lagerungsplattformen zur Lagerung und Bewässerung von Pflanzen bestehen meist aus ebenen Siebdruckplatten, die an ihren Rändern zum Beispiel durch Winkeleisen verstärkt sind. Auf diesen Platten lagern Pflanzen, die durch einen Schlauch oder andere Bewässerungseinrichtungen bewässert werden. Das von den Pflanzen nicht sofort aufgenommene Wasser fließt dabei über den Rand von der Lagerungsplattform ab, was zu einer kosten- und zeitintensiven Bewässerung, einem unnötig hohen Wasserverbrauch und dennoch häufig zu einer unzureichenden Bewässerung der Pflanzen führt.

Aus diesem Grunde, aber auch zur Platzeinsparung, sind die Lagerungsplattformen oft übereinander angeordnet. Dies kann dazu führen, daß beim Bewässern das Wasser aus einer oberen Lagerungsplattform in eine untere fließt, was allerdings auch nicht unproblematisch ist, da dann die Pflanzen in den unteren Lagerungsplattformen teilweise von oben bewässert werden, was für viele Pflanzenarten schädlich ist.

Aus US 3,772,827 ist eine Lagerungsplattform nach dem Oberbegriff des Anspruchs 1 bekannt, sowie eine Bewässerungsvorrichtung mit einem regalartigen Trägergestell und mehreren vertikal übereinander angeordneten Lagerungsplattformen.

US 2,952,096 zeigt ein Gewächshaus mit Pflanz- bzw. Bewässerungsvorrichtungen, die jeweils mehrere übereinander angeordnete Regalböden mit darauf gehaltenen Wannen aufweisen.

Die EP 0 445 320 A1 offenbart einen kastenförmigen Behälter für Hydrokulturen mit Ständerbeinen, von denen mehrere übereinander stapelbar sind und jeweils etwa mittig einen Überlauf aufweisen.

NL 1015602 zeigt einen Pflanzentransportwagen mit einem mit Rädern versehenen Grundgestell, auf dem modulartig wannenartige Böden übereinander aufgesetzt werden können.

Die Aufgabe der Erfindung besteht darin, eine Lagerungsplattform anzugeben, die eine kostengünstige und artgerechte Lagerung, Bewässerung und den Transport von Pflanzen ermöglicht.

Diese Aufgabe wird erfindungsgemäß durch eine Lagerungsplattform nach Anspruch 1 gelöst.

Bevorzugt ist vorgesehen, daß der Überlauf zum Einstellen eines gewünschten Flüssigkeitspegels höhenverstellbar ist.

Weiterhin kann vorgesehen sein, daß der Überlauf ein rohrförmiges Ableitelement aufweist, das fest oder höhenverstellbar in einer Öffnung in einem Boden der Lagerungsplattform gehalten ist. Das Ableitsystem bzw. der Überlauf kann stufenweise oder stufenlos höhenverstellbar sein.

Das Ableitelement kann optische Markierungen und/oder mechanische Rastmittel in vorbestimmten Positionen aufweisen. Ferner kann das Ableitelement mindestens eine seitlich gerichtete Ausflußöffnung aufweisen, und es kann drehbar in der Öffnung gehalten sein.

In vorteilhafter Weise ist vorgesehen, daß das Ableitelement einen Schlauch aus einem elastischen Material aufweist, dessen Außendurchmesser größer als der Durchmesser der Öffnung ist. Hierbei kann sich der Schlauch zu seinem den Überlauf bildenden Endabschnitt hin erweitern.

Es kann vorgesehen sein, daß in den Endabschnitt ein Erweiterungselement, insbesondere ein Erweiterungsring, eingesetzt ist.

Außerdem bevorzugt ist, daß einer Öffnung in einer Seitenwand der Lagerungsplattform ein höhenverstellbares Schiebeelement zugeordnet ist, um den Überlauf zu bilden.

In vorteilhafter Weise ist vorgesehen, daß die Lagerungsplattform Halterungsmittel zum Anbringen an einer Trageinrichtung, insbesondere an Streben eines Gestells, Regals oder Transportwagens, aufweist. Die Halterungsmittel können Haken, Ösen, vorstehende Stifte oder Schienen sein.

Weiterhin bevorzugt ist vorgesehen, daß die Lagerungsplattform eine rechtwinklige Grundfläche aufweist.

In bevorzugter Ausgestaltung der Erfindung ist vorgesehen, daß die Lagerungsplattform rechteckig ist und an zwei parallelen Schmalseiten jeweils zwei Halterungselemente zum Einhängen in Befestigungsöffnungen von Gestellstreben aufweist, wobei jedes Halterungselement ein entlang der jeweiligen Schmalseite verlaufendes und in Richtung einer jeweils zunächst liegenden Längsseite frei endenen Eingriffs-Endabschnitt aufweist.

Bevorzugt sind die Eingriffs-Endabschnitte der Halterungselemente jeweils in einem Eckbereich der Lagerungsplattform angeordnet. Die Halterungselemente können L-förmig ausgebildet sein und einen Halteschenkel und einen den Eingriffs-Endabschnitt bildenden Einhängeschenkel aufweisen. Zweckmäßigerweise sind die Halteschenkel an einer Seitenwand befestigt.

Bevorzugt sind die Eingriffs-Endabschnitte mit einer Ausnehmung zum formschlüssigen Einhängen in Gestellstreben versehen.

Ferner sieht die Erfindung vor, daß die Schmalseiten zwischen den Halterungselementen jeweils mit einer Erweiterung versehen sind, innerhalb der jeweils ein Überlauf angeordnet ist. In bevorzugter Ausgestaltung ist vorgesehen, daß die Lagerungsplattform an einer Unterseite mit Rollen versehen ist. Ferner kann vorgesehen sein, daß die Lagerungsplattform als unterste Lagerungsplattform einer Bewässerungsvorrichtung ausgebildet ist, rechteckig ist und in jedem Eckbereich mit einem Aufnahmemittel für eine Gestellstrebe versehen ist.

Die obengenannte Aufgabe wird außerdem erfindungsgemäß durch eine Bewässerungsvorrichtung zum Lagern, Bewässern und Transportieren von Pflanzen mit mindestens zwei übereinander angeordneten erfindungsgemäßen Lagerungsplattformen gelöst, wobei die Lagerungsplattformen so angeordnet sind, daß eine über den Überlauf einer (jeder) Lagerungsplattform ablaufende Flüssigkeit in eine darunter, insbesondere zunächst benachbart, angeordnete Lagerungsplattform fließen kann.

Es kann vorgesehen sein, daß die Lagerungsplattformen so ausgebildet und angeordnet sind, daß das rohrförmige Ableitelement einer (jeder) oberen Lagerungsplattform bis auf einen Boden einer darunter, insbesondere zunächst benachbart, angeordneten Lagerungsplattform reicht.

Es kann vorgesehen sein, daß eine (jede) Lagerungsplattform unmittelbar auf einer darunter angeordneten Lagerungsplattform lagert, d.h. ohne daß ein separates Gestell o.ä. vorhanden ist.

Alternativ kann vorgesehen sein, daß die Bewässerungsvorrichtung eine Trageinrichtung, insbesondere ein Gestell, Regal oder Rollwagen aufweist.

In vorteilhafter Weise ist vorgesehen, daß die Trageinrichtung Halterungsmittel zum Anbringen von Lagerungsplattformen aufweist.

In einer zweckmäßigen Ausbildung sind die Halterungsmittel Haken, Ösen, vorstehende Stifte oder Schienen.

Die Erfindung sieht weiter als Variante vor, daß die Lagerungsplattformen in der Draufsicht fächerförmig oder in Form einer Pyramide angeordnet sind.

Eine weitere Ausgestaltung der Bewässerungsvorrichtung sieht vor, daß mindestens zwei Lagerungsplattformen vorhanden sind, wobei die Gestellstreben jeweils mindestens eine Einhängeausnehmung zum Einhängen der Eingriffs-Endabschnitte aufweisen, wobei die Einhängeausnehmungen von jeweils einer Schmalseite der Lagerungsplattformen zugeordneten Gestellstreben einander zugekehrt sind. Zweckmäßigerweise sind die Gestellstreben L-, U- oder Rechteckprofile oder auch Rohrprofile.

Die Erfindung wird nachfolgend anhand eines Ausführungsbeispiels erläutert, wobei auf eine Zeichnung Bezug genommen wird, in der
- Fig. 1: eine Perspektivansicht einer ersten Ausführungsform einer erfindungsgemäßen Lagerungsplattform zeigt,
- Fig. 2: eine Längsschnittansicht einer ersten Ausführungsform eines Überlaufs der Lagerungsplattform zeigt,
- Fig. 3: eine Perspektivansicht einer ersten Ausführungsform einer erfindungsgemäßen Bewässerungsvorrichtung zeigt,
- Fig. 4: eine Lagerungsplattform nach Figur 1 (angedeutet) mit Einhänge-Haken zeigt,
- Fig. 5: eine Schnittansicht einer zweiten Ausführungsform eines Überlaufs zeigt,
- Fig. 6: eine Draufsicht auf eine zweite Ausführungsform einer erfindungsgemäßen Lagerungsplattform zeigt,
- Fig. 7: eine perspektivische Ansicht der Lagerungsplattform nach Figur 6 zeigt,
- Fig. 8: einen vergrößerten Teilbereich der Lagerungsplattform nach Figur 6 und 7 zeigt,
- Fig.9: eine perspektivische Ansicht einer weiteren Ausführungsform einer erfindungsgemäßen Lagerungsplattform zeigt,
- Fig. 10: eine Draufsicht auf die Lagerungsplattform nach Figur 8 zeigt,
- Fig. 11: eine perspektivische Ansicht von mehreren aufeinander gestapelten Lagerungsplattformen nach Figur 9 und 10 zeigt,
- Fig. 12: eine Seitenansicht entsprechend Figur 10 zeigt,
- Fig. 13: eine perspektivische Ansicht einer zweiten Ausführungsform einer erfindungsgemäßen Bewässerungsvorrichtung zeigt,
- Fig. 14: die Bewässerungsvorrichtung nach Figur 13 aus einem anderen Blickwinkel zeigt, und
- Fig. 15: die Bewässerungsvorrichtung nach Figur 13 und 14 in einer Vorderansicht zeigt.

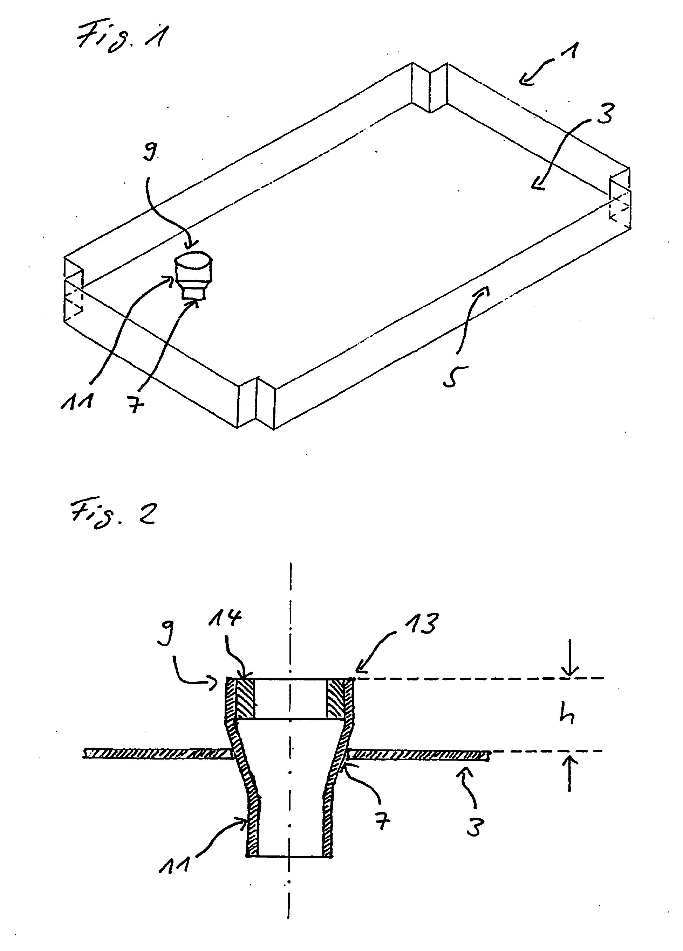

In Fig. 1 ist eine im ganzen mit 1 bezeichnete erste Ausführungsform einer erfindungsgemäßen Lagerungsplattform dargestellt. Die Lagerungsplattform 1 weist einen ebenen Boden 3 und dazu senkrecht angeordnete Seitenwände 5 auf. In dem Boden 3 befindet sich in einer Öffnung 7 ein höhenverstellbarer Überlauf 9, der alternativ auch fest in der Öffnung 7 gehalten sein könnte.

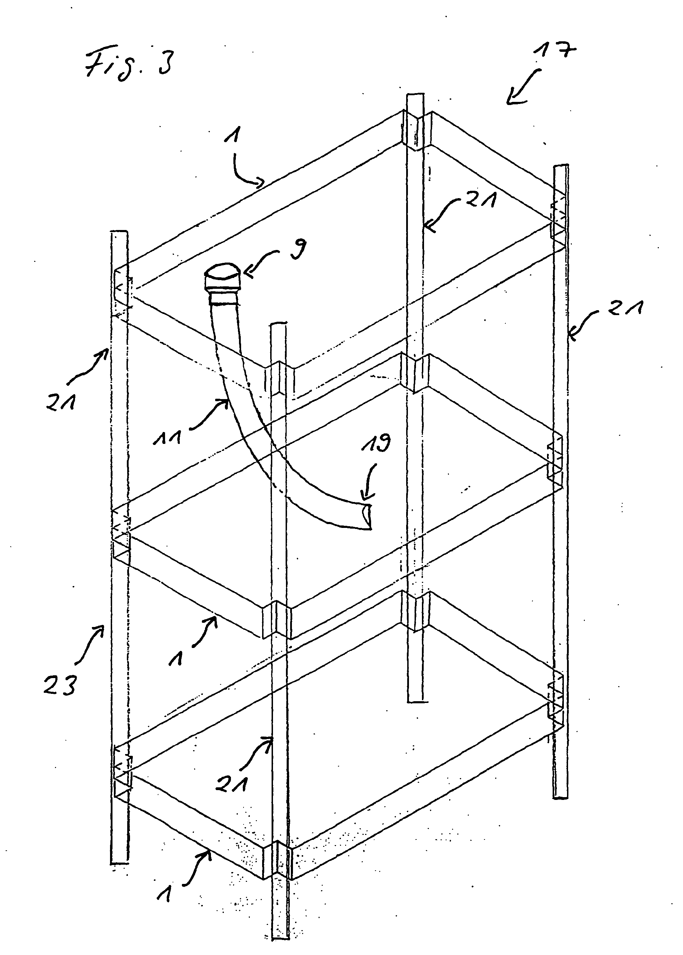

Der Überlauf 9 ist in Fig. 2 im einzelnen dargestellt. Er weist ein Ableitelement 11 auf, das in dieser Ausführungsform durch einen elastischen Schlauch gebildet ist. Der Schlauch 11 ist zu einem den Überlauf bildenden Endabschnitt 13 hin aufgeweitet, so daß er gegen eine Bewegung nach unten blockiert ist. Die Erweiterung des Schlauches 11 wird durch ein Erweiterungselement, z.B. durch einen Messingring 14, der in den Schlauch 11 eingesetzt ist, bewirkt.

Die Elastizität des Schlauches 11 ermöglicht in gewissen Grenzen eine abdichtende Höhenverstellung der oberen Schlauchöffnung, die letztlich den Überlauf 9 bildet. Wird der Schlauch 11 in der Öffnung nach oben geschoben, so verlagert sich die Stelle, an der die Öffnung 7 mit dem Schlauch 11 in Kontakt steht, von dem Endabschnitt 13 weg. Dies führt aufgrund der Elastizität des Schlauches 11 zu einer Erweiterung des Schlauches im Bereich der neuen Position der Öffnung 7 und somit zu einer erneuten Abdichtung. Wenn dagegen der Schlauch 11 nach unten geschoben wird, so verlagert sich die Stelle, an der die Öffnung mit dem Schlauch 11 in Kontakt steht, in Richtung auf den Endabschnitt 13. Dies führt zu einer elastischen Verengung des Schlauches 11 im Bereich der neuen Position der Öffnung 7. Die Erweiterung bzw. die Verengung beim Verschieben und somit die Anpassungsfähigkeit des Schlauchdurchmessers an den Durchmesser der Öffnung 7 führen zu einem abdichtenden Halten des Schlauches 11 an verschiedenen Höhenpositionen. Dadurch kann die Höhe der Schlauchöffnung 13 und damit der Pegel h einer in die Lagerungsplattform 1 einzulassenden Flüssigkeit in Grenzen eingestellt werden, und der Schlauch kann wegen der Erweiterung nicht nach unten herausfallen.

Statt einer Erweiterung im Bereich der Öffnung 7 kann der Schlauch 11 in diesem Bereich über eine gewisse Länge einen konstanten Außendurchmesser aufweisen, der dann geringfügig größer als der Durchmesser der Öffnung 7 sein muß, um einen haltenden und abdichtenden Sitz des (elastischen) Schlauches 11 in der Öffnung 7 und eine Höhenverstellbarkeit durch Verschieben des Schlauches 11 in der Öffnung 7 zu ermöglichen.

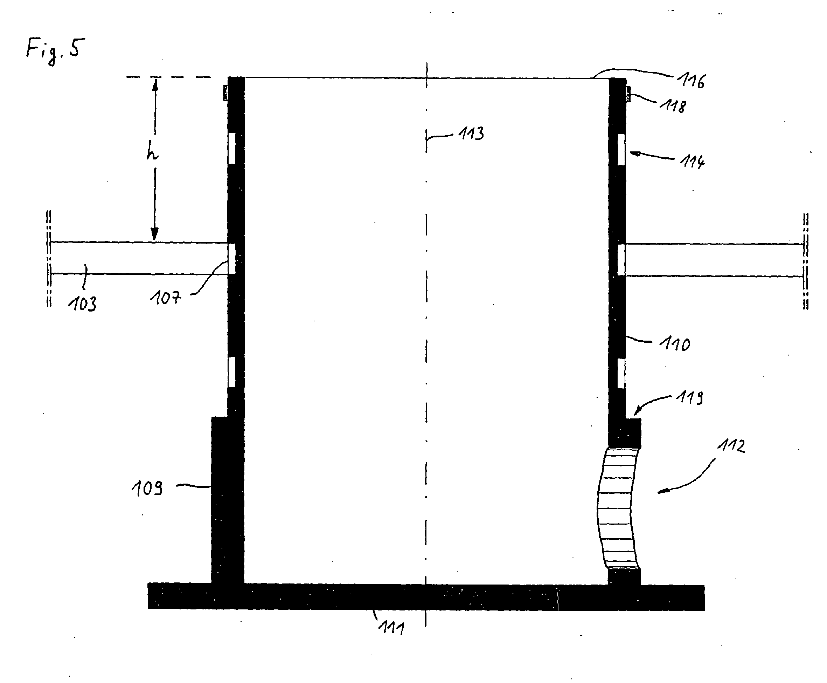

Alternativ kann das Ableitelement (siehe auch unten Figur 5) durch ein Rohr aus Kunststoff oder Metall gebildet sein, das abdichtend in einer Öffnung im Boden der Lagerungsplattform gehalten ist. Das Rohr kann einen Außendurchmesser aufweisen, der geringfügig größer ist als der Durchmesser der Öffnung, so daß das Rohr durch Reibungskräfte in der Öffnung gehalten wird und die Höhe der Überlaufkante durch Schieben oder Ziehen des Rohres einstellbar ist. Der Bereich zwischen Rohr und Öffnung kann zusätzlich durch eine geeignete Dichtung abgedichtet sein.

In einer weiteren Alternative wird der höhenverstellbare Überlauf durch ein Schiebeelement gebildet, das sich in einer Öffnung der Seitenwand der Lagerungsplattform befindet. Bei Überschreiten eines gewünschten, eingestellten Pegels fließt das Wasser über eine Überlaufkante des Schiebeelements durch die Öffnung ab. Das Schiebeelement kann zum Beispiel eine Platte sein, die durch Schienen, die am Rand der Öffnung ausgebildet sind, geführt ist. Das Schiebeelement ist höhenverstellbar und kann an gewünschten Positionen einrastbar sein. In einem Bereich zwischen Schiebeelement und Öffnung können Dichtungen aus Gummi oder Kunststoff vorgesehen sein.

Die Lagerungsplattform 1 kann beispielsweise aus Kunststoff, der mit Fasern verstärkt sein kann, aus einem korrosionsbeständigen Metall oder aus einem geeigneten Verbundmaterial bestehen.

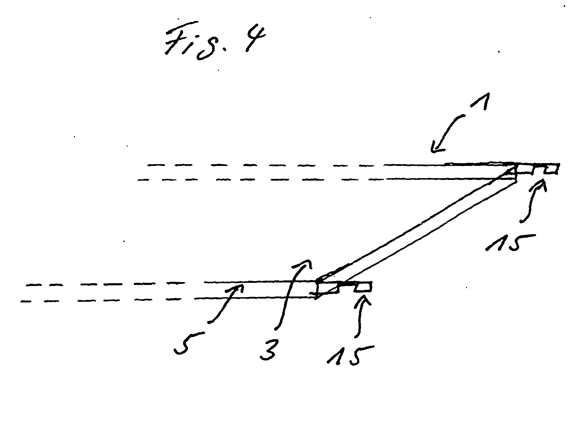

In Figur 3 ist eine Ausführungsform einer erfindungsgemäßen Bewässerungsvorrichtung 17 dargestellt, in der drei erfindungsgemäße Lagerungsplattformen 1 an Gestellstreben 21 eines Gestells 23 übereinander angeordnet sind. Jede Lagerungsplattform 1 weist einen Überlauf 9 auf, der mit einem nach unten abgehenden Schlauch 11 versehen ist, wobei Figur 3 beispielhaft lediglich einen Schlauch zeigt. Der dem Überlauf 9 gegenüberliegende, freie Endabschnitt 19 des Schlauches 11 endet auf oder knapp über dem Boden 3 der nächst benachbarten, unteren Lagerungsplattform 1. Der an der oberen Lagerungsplattform gehaltene Schlauch 11 kann aber auch oberhalb des Bodens der nächst benachbarten, unteren Lagerungsplattform 1 enden. Der Schlauch 11 der untersten Lagerungsplattform 1 kann in einen Abfluß oder in einen Aufbewahrungsbehälter zur weiteren Nutzung der Flüssigkeit (beispielsweise Wasser mit Zusatzstoffen wie Dünger o.ä.) führen.

Die Lagerungsplattformen weisen, wie in Figur 4 angedeutet ist, Halterungsmittel auf, z.B. Haken 15, die an Schmalseiten der rechteckigen Lagerungsplattform stirnseitig in Längsrichtung vorstehen. Damit und mit entsprechenden Ausnehmungen oder vorstehenden Stiften (nicht dargestellt) der Gestellstreben 21 sind die drei Lagerungsplattformen 1 lösbar an den Gestellstreben 21 des Gestells 23 der Bewässerungsvorrichtung 17 befestigt. Auch eine höhenverstellbare Anbringung (stufenlos oder in festen Abständen) ist zweckmäßig.

Bei der Lagerungsplattform 1 gemäß Figur 1 bis 4 sind die dargestellten Halterungsmittel 15 in herkömmlicher Weise angeordnet, d. h. so wie bei bekannten Lagerungsplattformen, die eben und ohne Überlauf ausgebildet sind. Aufgrund der an den Schmalseiten in Längsrichtung vorstehenden Anordnung von Haken 15 werden die Lagerungsplattformen 1 in ein Gestell 23 gemäß Figur 3 eingehängt, indem zunächst zwei Haken 15, die sich an einer gemeinsamen Schmalseite einer Lagerungsplattform befinden, in entsprechende Ausnehmungen von zwei benachbarten Gestellstreben 21 eingesetzt und weitestmöglich in diese eingeschoben werden. In dieser Position können die Haken 15 der gegenüberliegenden Schmalseite der Lagerungsplattform in Ausrichtung mit entsprechenden Aufnahmeöffnungen der gegenüberliegenden Gestellstreben 21 des Gestells bewegt werden und unter Bewegung der Lagerungsplattform in Längsrichtung in diese eingeführt werden, bis sich alle vier Haken 15 in etwa gleich tief in den genannten vier Ausnehmungen der Gestellstreben 21 befinden. In dieser Stellung können in Figur 4 angedeutete Ausnehmungen der Haken 15 in die Ausnehmungen der Gestellstreben 21 formschlüssig einrasten, so daß die Lagerungsplattform in ihrer gewünschten Lage fixiert ist.

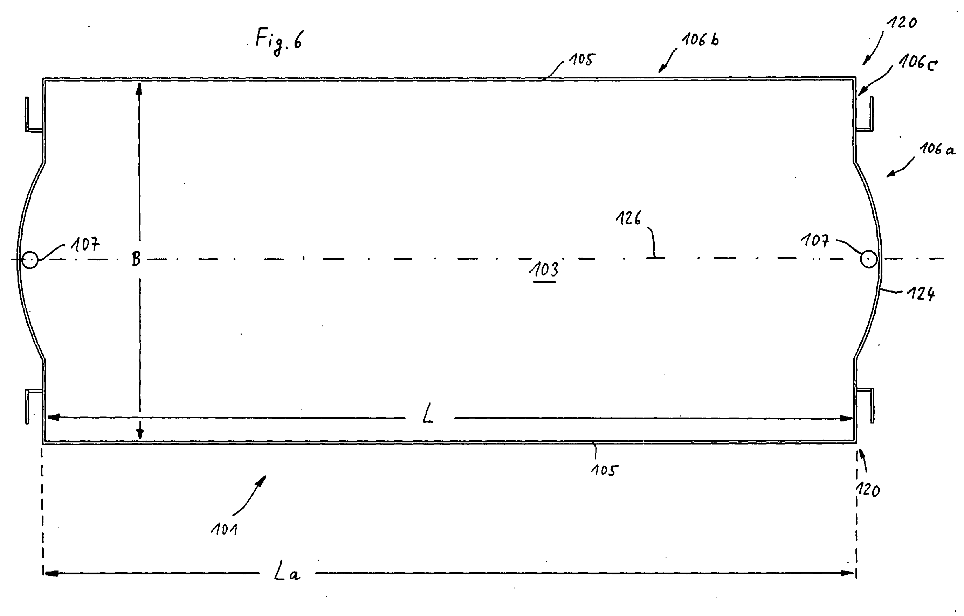

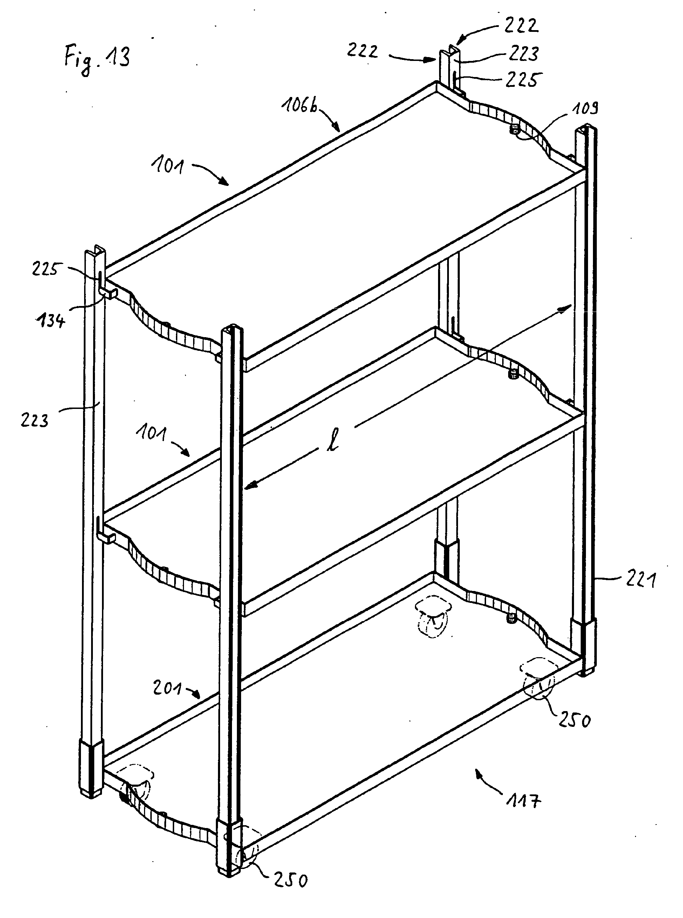

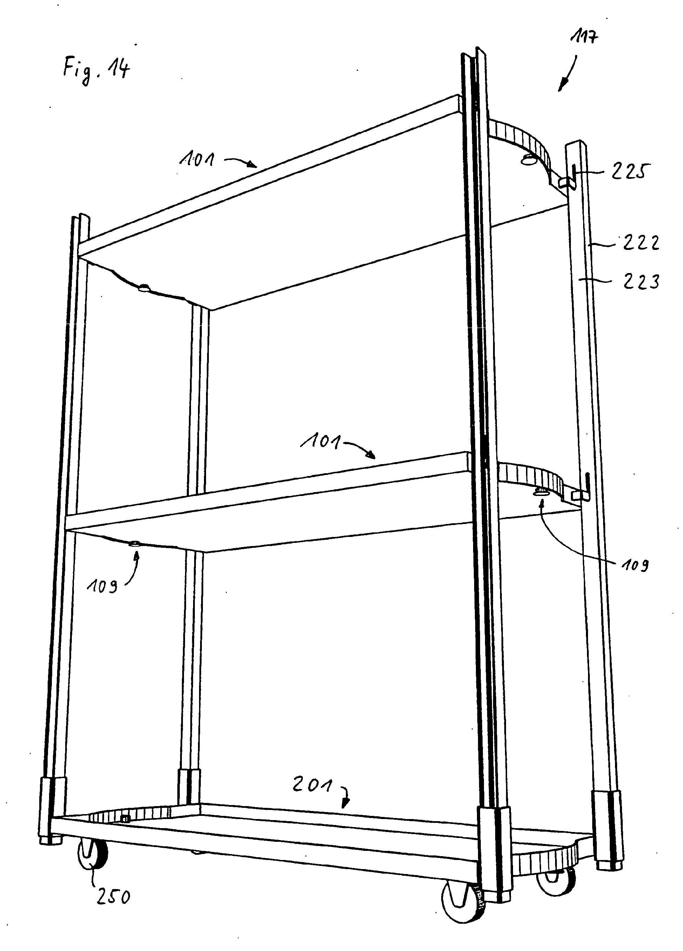

Aufgrund der sich in Längsrichtung der Lagerungsplattform erstreckenden Haken 15 und der daraus resultierenden Einsetzbewegung der Lagerungsplattform in deren Längsrichtung ist es erforderlich, daß die Lagerungsplattform in ihren Eckbereichen im eingesetzten Zustand einen gewissen Handhabungsabstand von den Gestellstreben 21 aufweist, d.h. zumindest in den Eckbereichen etwas kürzer ist als der lichte Abstand in Längsrichtung zwischen den Gestellstreben, um den oben beschriebenen Einsetzvorgang ausführen zu können. Wie weiter unten im Zusammenhang mit Figur 13 und 14 noch erläutert werden wird, ist dies bei einer andersartigen Ausführung der Halterungsmittel gemäß Fig. 6 bis 8 nicht erforderlich.

Die Lagerungsplattformen 1 können auch versetzt übereinander angeordnet sein, z.B. stufen- oder fächerartig oder in Form einer Pyramide, was sich besonders für Ausstellungs- oder Werbezwecke eignet. Dabei sind die Schläuche der Lagerungsplattformen jeweils so geführt, daß sie das aus einer Lagerungsplattform 1 ablaufende Wasser in eine tiefere, insbesondere die nächst tiefere, Lagerungsplattform leiten. Lagerungsplattformen, die z.B. Kakteen oder andere Pflanzen enthalten, die wenig oder gar kein Wasser benötigen, können hierbei übergangen werden.

Die Bewässerungsvorrichtung 17 kann einen fahrbaren Untersatz, insbesondere Rollen, aufweisen, die beispielsweise unten an den Streben 21 befestigt sein können.

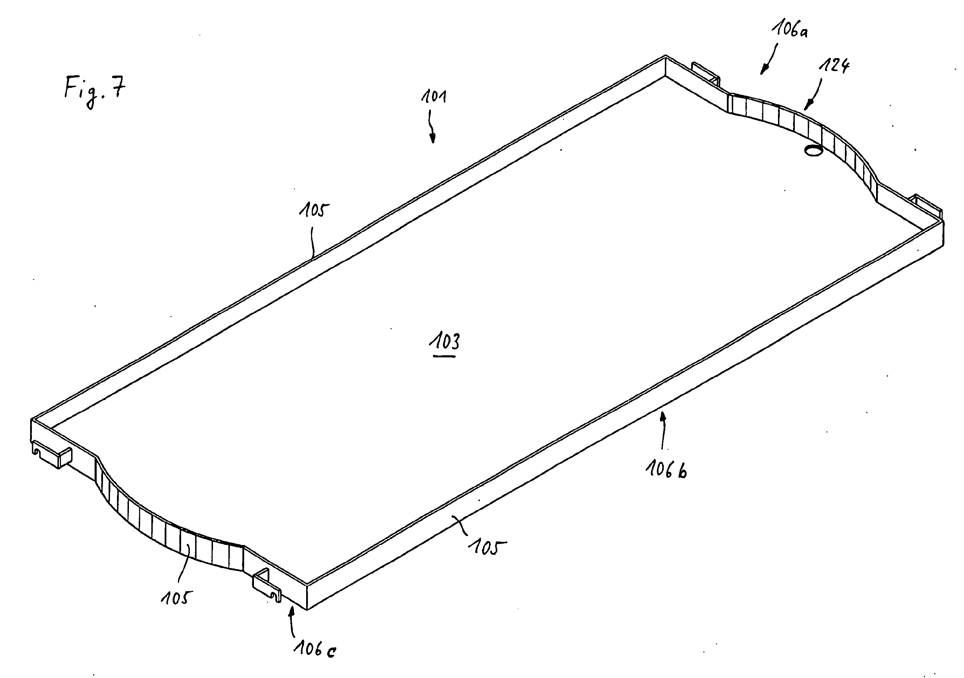

Figur 5 zeigt eine weitere Ausführungsform eines Überlaufs oder Ableitelements 109, der in eine Öffnung 107 eines Bodens 103 eingesetzt ist, beispielsweise in eine weitere Ausführungsform einer Lagerungsplattform 101, die in Figur 6 und 7 mehr im Einzelnen dargestellt ist.

Der Überlauf 109 besteht aus einem in einer Richtung (oben) offenen zylindrischen Grundkörper 110, der an einem unteren Ende mit einer kreisförmigen Bodenwand 111 abgeschlossen ist. Eine Abflußöffnung 112 ermöglicht das Abfließen von Wasser, das von oben über einen Rand 116 in den zylindrischen Grundkörper 110 einströmt. Durch Drehen des Überlaufs 109 um seine Längsachse 113 kann die Richtung der Abflußöffnung 112 und damit die Abflußrichtung des ausströmenden Wassers bestimmt werden. Dadurch kann sichergestellt werden, daß der ablaufende Wasserstrahl auf eine darunter befindliche Lagerungsplattform trifft. Auch eine Arretierung bzw. Begrenzung des Drehwinkels kann vorgesehen sein. Selbstverständlich sind auch mehrere Abflußöffnungen 112 möglich, die über den Umfang des Grundkörper 110 verteilt angeordnet sind.

Wie Figur 5 weiter zeigt, ist der Grundkörper 110 auf seiner Außenseite mit mehreren Rastelementen 114 (Ausnehmungen oder Vorsprünge) versehen, die eine Höheneinstellung in vorgegebenen Abständen ermöglichen, d.h. so, daß der obere Rand 116 des Grundkörpers 110 in einer gewünschten Höhe h oberhalb des Bodens 103 steht, wodurch ein maximaler Wasserstand oder Pegel h auf dem Boden vorgegeben ist.

Anstelle der Rastelemente 114 können auch optische Markierungen vorgesehen sein, die eine Einstellung einer gewünschten Höhe h erleichtern. Im Bereich des oberen Rands 116 ist ein Anschlag 118 vorgesehen, der ein vollständiges Herausziehen des Überlaufs 109 aus der Öffnung 107 verhindert oder zumindest erschwert. Ein Absatz 119 legt einen maximal einstellbaren Pegel fest (Überlauf 109 ganz nach oben geschoben).

Wegen des Anschlags 118 bleibt auch bei ganz abgesenktem Überlauf 109 stets ein Rest an Wasser in der Lagerungsplattform stehen. Wenn eine Restentleerung gewünscht ist, kann dies durch Anordnen einer Ausklinkung in dem Überlauf und/oder durch Vorsehen einer Vertiefung im Boden 103 im Bereich der Öffnung 107 erfolgen. Außerdem kann vorgesehen sein, daß der Boden 103 in sich gebogen bzw. gewölbt ausgebildet ist, so daß zum einen eine größere Stabilität erzielt wird und zum anderen ein Gefälle erreicht wird, so daß das Wasser stets in Richtung auf den bzw. die Überläufe abfließt. Dadurch ist gewährleistet, daß die Lagerungsplattform ganz entleert werden kann und beim Herausnehmen praktisch wasserfrei ist.

Figur 6 bis 8 erläutern den Aufbau einer zweiten Ausführungsform einer erfindungsgemäßen Lagerungsplattform 101. Die Lagerungsplattform 101 ist im Ganzen rechteckig mit einem Boden 103, Seitenwänden 105, Längsseiten 106b und Schmalseiten 106a, Ecken 120 sowie zwei Öffnungen 107, in denen sich nicht dargestellte Überläufe 109 bspw. gemäß Figur 5 befinden. Im Bereich der Schmalseiten 106a ist jeweils eine Erweiterung 124 vorgesehen, innerhalb der sich die Öffnung 107 befindet. Die Erweiterung 124 ist im dargestellten Ausführungsbeispiel kreisbogenförmig, könnte allerdings auch anders geformt sein, beispielsweise rechteckig, dreieckig oder in sonstiger Weise. Der Zweck der Erweiterung 124 besteht darin, die Öffnung 107 bzw. den Überlauf 109 außerhalb einer rechteckigen Lagerungsfläche mit Abmessungen L x B anordnen zu können, die durch die Längsseiten 106b und durch gerade Abschnitte 106c der Schmalseiten 106a oder anders gesagt durch die Ecken 120 der Lagerungsplattform 101 festgelegt ist (Länge, Breite der inneren Standfläche der Lagerungsplattform).

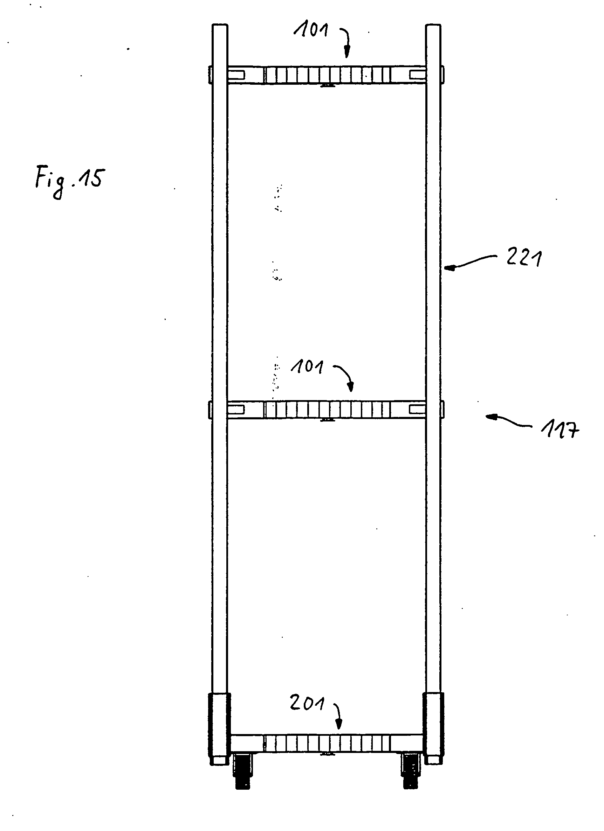

Die Erweiterung 124 könnte auch unmittelbar an den Ecken 120 der Lagerungsplattform 101 beginnen, wobei dann die genannte rechteckige Lagerungsfläche durch die Eckpunkte der Lagerungsplattform festgelegt wäre. Wesentlich ist in diesem Zusammenhang, daß eine Anordnung des Überlaufs 109 innerhalb der genannten rechteckigen Lagerungsfläche der Lagerungsplattform nachteilig wäre. Das liegt daran, daß eine Aufstellung von Pflanzgefäßen auf der Lagerungsplattform meist in rechteckigen Sammelboxen zu beispielsweise jeweils sechs einzelnen Pflanzgefäßen erfolgt, deren Länge der Breite B der Lagerungsplattform und deren Breite einem ganzzahligen Bruchteil von deren Länge L entspricht. Eine derartige Aufstellung ist ausschließlich innerhalb der genannten rechteckigen Lagerungsfläche möglich. Andererseits ist die Länge L der Lagerungsfläche dadurch vorgegeben, daß die Abmessungen und gegenseitigen Abstände von Gestellstreben bei einer Bewässerungsvorrichtung entsprechend Figur 3 (siehe nachfolgend auch Figur 13 bis 15) in der Praxis aufgrund einer großen Anzahl bereits existierender Bewässerungsvorrichtungen vorgegeben ist. Dabei sind mittelbar auch die Abmessungen L, B der Lagerungsplattform vorgegeben, innerhalb der sich kein Überlauf befinden sollte.

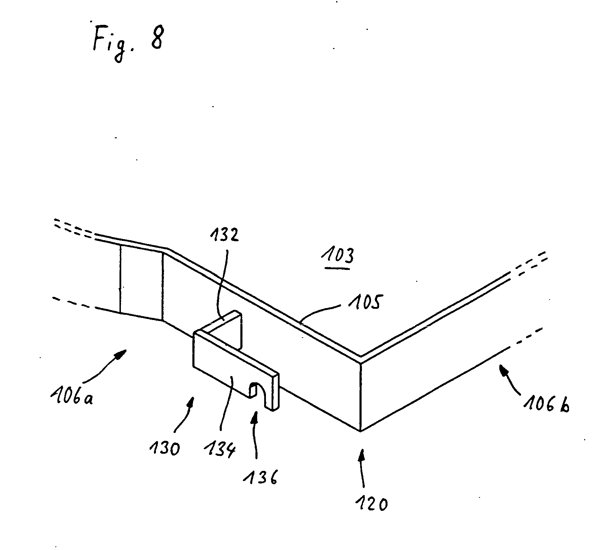

Wie Figur 6 und 7 und insbesondere Figur 8 in vergrößertem Maßstab zeigen, sind an den Seitenwänden 105 im Bereich der Schmalseiten 106a der Lagerungsplattform 101 im Bereich der Ecken 120 bzw. in der Nähe der Längsseiten 106b Halterungselemente 130 angeordnet, die in der dargestellten Ausführungsform L-förmig ausgebildet sind und einen Halteschenkel 132 aufweisen, der an der Seitenwand 105 befestigt ist, sowie einen von dem Halteschenkel abgehenden Einhängeschenkel 134, der in Richtung auf die zunächstliegende Längsseite 106b frei endet und senkrecht zu dieser und parallel zu der ihm zugeordneten Schmalseite 106a angeordnet ist. Wie insbesondere Figur 8 zeigt, weist der Einhängeschenkel 134 eine halbkreis- oder schlitzförmige Ausnehmung 136 auf, damit die Lagerungsplattform 101 in noch zu erläuternder Weise in Gestellstreben einer Bewässerungsvorrichtung eingehängt werden kann.

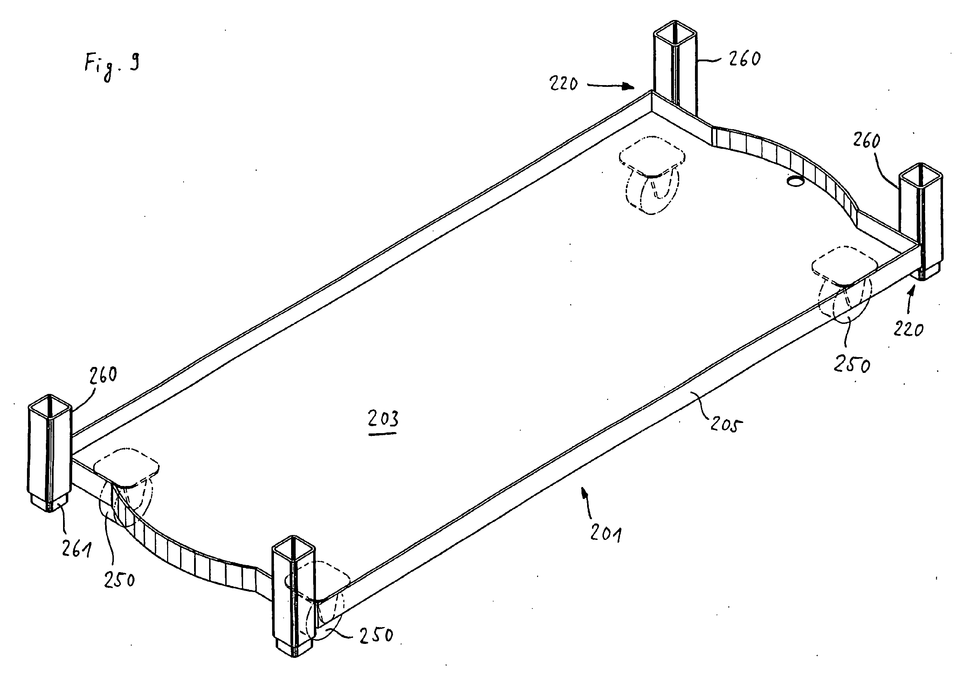

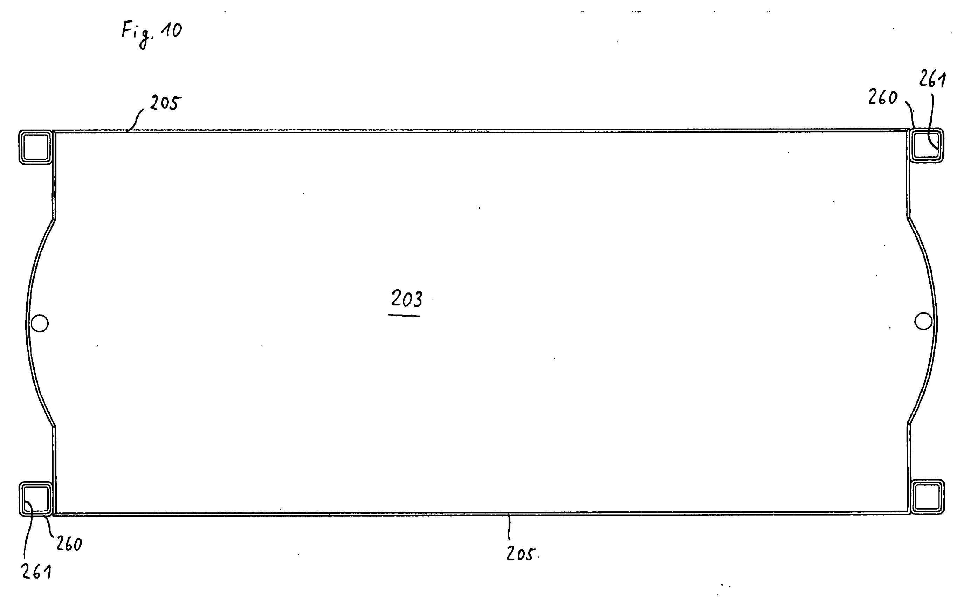

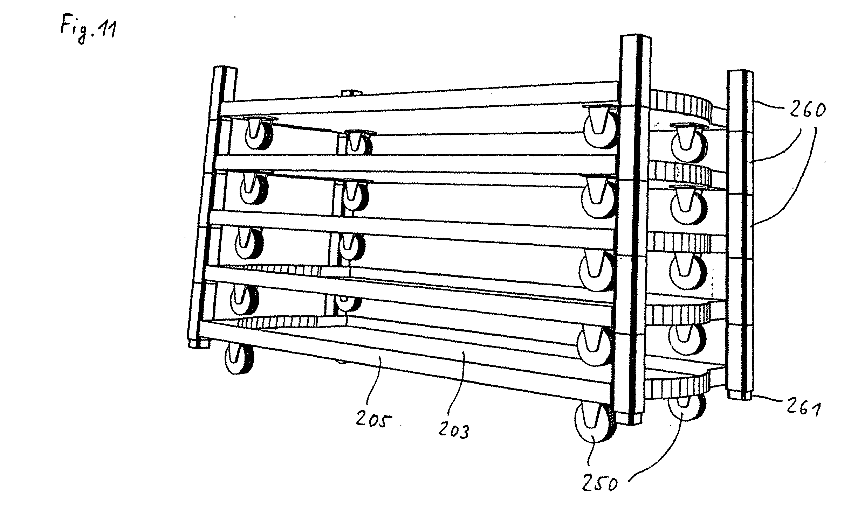

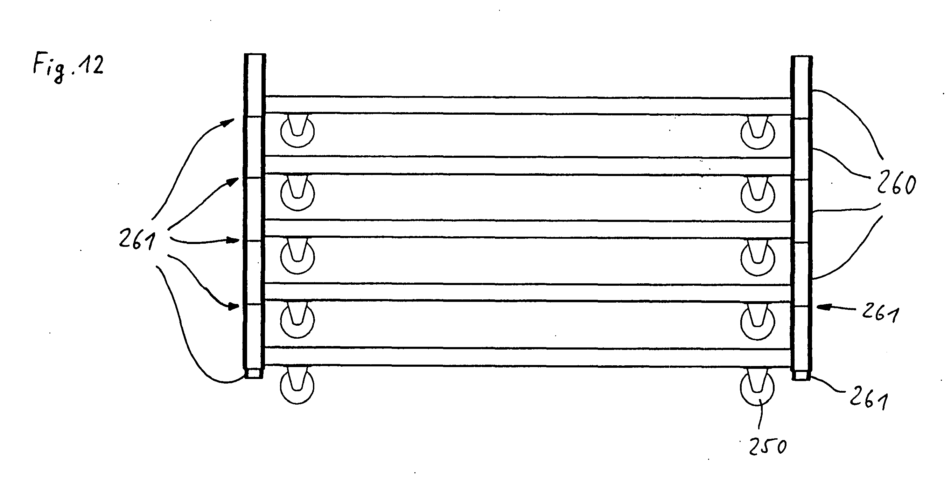

Figur 9 bis 12 erläutern eine weitere Ausführungsform einer erfindungsgemäßen Lagerungsplattform 201, die im Unterschied zu der Lagerungsplattform 101 nach der ersten Ausführungsform einerseits mit an ihrem Boden 203 unterseitig angebrachten Rollen 250 und andererseits im Bereich der Ecken 220 jeweils mit einem Aufnahmemittel 260 für eine (weiter unten noch erläuterte und in Figur 13 bis 15 dargestellte) Gestellstrebe 221 versehen ist. Die Aufnahmemittel 260 sind in diesem Beispiel an Boden 203 und Seitenwänden 205 befestigte Vierkantrohre mit quadratischem Querschnitt, in deren unteren Bereich Anschlagteile 261 in Form von kleineren und kürzeren Vierkantrohrstücken eingesetzt sind, deren Außenkontur der Innenkontur der Vierkantrohre 260 entspricht. Durch diese Maßnahme wird einerseits ein Anschlag für eine von oben in die Aufnahmemittel 260 eingeschobene Gestellstrebe 221 geschaffen, wobei eine Außenkontur der Gestellstrebe im wesentlichen der Innenkontur des Aufnahmemittels 260 entspricht oder zumindest in diese hineinpaßt, und andererseits wird durch die nach unten vorstehenden Bereiche der Anschlagteile 261 eine Stapelbarkeit der Lagerungsplattformen 201 erreicht, was in Figur 11 und 12 dargestellt ist. Selbstverständlich könnten die Aufnahmemittel 260 eine andersartige Querschnittsform aufweisen, z.B. zur Aufnahme von Gestellstreben mit nicht-quadratischem Querschnitt (rechteckig, L-förmig, rund oder in sonstiger Weise geformt).

Figur 13 bis 15 zeigen unterschiedliche Ansichten einer weiteren Ausführungsform einer erfindungsgemäßen Bewässerungsvorrichtung 117, mit einer untersten Lagerungsplattform 201 gemäß Figur 9 bis 12, zwei Lagerungsplattformen 101 gemäß Figur 6 bis 8 und vier in die Aufnahmemittel 260 der untersten Lagerungsplattform 201 eingesetzten Gestellstreben 221.

Wie insbesondere Figur 13 und 14 zeigen, sind die Gestellstreben 221 als U-Profile ausgebildet, deren Querschnittsform bzw. Außenkontur quadratisch ist (gleiche Steg- und Schenkellänge) und die daher mit geringem Spiel in die Aufnahmemittel 260 einsetzbar sind, wobei die Anschläge 261 eine definierte Einsetztiefe vorgeben. Die die Anschläge bildenden Vierkantrohrstücke 261 können bspw. ebenso tief in die Aufnahmemittel 260 eingesetzt sein, wie sie daraus vorstehen.

Wie Figur 13 und 14 weiterhin zeigen, sind die Gestellstreben 221 so eingesetzt, daß Schenkelabschnitte 222 nach außen, d.h. in Richtung der Längsseiten 106b der Lagerungsplattformen 102, 201 weisen, während die Schenkelabschnitte 222 verbindende Stegabschnitte 223 der Gestellstreben 221 im wesentlichen parallel zu den Längsseiten 106b und somit zueinander weisend angeordnet sind. Zur Realisierung der erfindungsgemäß erzielten Vorteile ist es allerdings unerheblich, ob Schenkelabschnitte 222 oder Stegabschnitte 223 zueinander weisend angeordnet sind, da es wesentlich nur darauf ankommt, daß im Bereich der Einhängeschenkel 134 der Halterungselemente 130 ein entsprechender Materialbereich einer Gestellstrebe 221 zum Einhängen zur Verfügung steht. Zu diesem Zwecke sind die Stegabschnitte 223 jeweils in einer gewünschten Höhe mit senkrechten bzw. in Längsrichtung der Streben verlaufenden Einhängeschlitzen 225 versehen, in die die Einhängeschenkel 134 eingehängt sind. Dabei umgreifen die Ausnehmungen 136 die Wandstärke des Materials der Stegabschnitte 223.

Die in Figur 13 und 14 dargestellten U-förmigen Gestellstreben 221 könnten alternativ gegenüber der dargestellten Stellung um 90° um ihre Längsachse verdreht eingesetzt werden, sofern die Einhängeschlitze 225 in den dann zueinander weisenden Schenkelabschnitten 222 eingebracht wären. Eine um 180° verdrehte Einsetzstellung wäre nur nach entsprechender Abänderung, d.h. Verlängerung der Einhängeschenkel 134 möglich, wobei allerdings eine derartige Anordnung aufgrund der dann nach außen vorstehenden Enden der Einhängeschenkel 134 weniger günstig wäre.

Im Gegensatz zu dem weiter oben beschriebenen Einhängevorgang einer Lagerungsplattform gemäß Figur 3 und 4 erfolgt der Einhängevorgang einer Lagerungsplattform 101 in Querrichtung, d.h. so, daß zunächst zwei einer gemeinsamen Längsseite 106b einer Lagerungsplattform zugeordnete Einhängeschenkel 134 in entsprechende Einhängeschlitze 225 eingeschoben werden, dann die einer Längsachse 126 der Lagerungsplattform 101 gegenüberliegenden Einhängeschenkel 134, die der anderen Längsseite 106b zugeordnet sind, auf Höhe der entsprechenden, gegenüberliegenden Einhängeschlitze 225 gebracht und in diese eingeschoben werden. Hierbei ist ersichtlich kein Handhabungsabstand zwischen den stirnseitigen Endbereichen bzw. den Schmalseiten 106a der Lagerungsplattform und den Gestellstreben erforderlich.

Die in Figur 13 bis 15 erläuterte Bewässerungsvorrichtung weist gegenüber einer Anordnung etwa gemäß Figur 3 und 4, bei der Halterungselemente 15 in Längsrichtung (parallel zu den Längsseiten der Lagerungsplattform) angeordnet sind, den Vorteil auf, daß die äußere Längenabmessung La der Lagerungsplattformen 101 (Fig. 6) im Bereich der geraden Abschnitte 106c der Schmalseiten 106a genau dem inneren, lichten Abstand 1 zwischen den Gestellstreben 221 entsprechen kann, ohne daß zwischen den Schmalseiten 106a der Lagerungsplattformen 101 und den Gestellstreben 221 ein Abstand vorgesehen werden muß, der ein Einsetzen der Lagerungsplattformen ermöglicht, wie dies bei einer Ausführung beispielsweise gemäß Figur 3 und 4 notwendig ist, bei der die Halterungselemente in Längsrichtungen der Lagerungsplattform verlaufen.

Der auf diese Weise erzielte Längengewinn einer erfindungsgemäßen Lagerungsplattform und der oben genannten Lagerungsfläche kann mehrere Zentimeter betragen und hat bei einem vorgegebenen Abstandsmaß 1 der Gestängestreben 221 zur Folge, daß auf jeder einzelnen Lagerungsplattform 101 mehrere Pflanzgefäße mehr aufgestellt werden können, als dies bei einer Anordnung beispielsweise gemäß Figur 3 und 4 der Fall ist, bei der das Einhängen in Längsrichtung erfolgt.

Bei einer herkömmlichen Lagerungsplattform ohne Seitenwände 105 spielen derartige Überlegungen eine untergeordnete Rolle, da bei einer derartigen Bauweise der zwischen den Gestellstreben 221 vorhandene Zwischenraum mit einer Längenabmessung 1 meist vollständig ausgenutzt werden kann, weil keine Seitenwände 105 vorhanden sind und auf der Lagerungsplattform stehende Pflanzgefäße an den Schmalseiten geringfügig über den Boden der Lagerungsplattform überstehen können, was bei einer erfindungsgemäßen Lagerungsplattform wegen der Seitenwände 105 nicht möglich ist.

Die Lagerungsplattform oder deren nutzbare Stellfläche (LxB) kann auch näherungsweise oder exakt quadratisch sein, wobei die Vergrößerung der tatsächlich nutzbaren Stellfläche LxB gegenüber dem Stand der Technik aufgrund der erfindungsgemäßen Anordnung der Halterungselmente in diesem Fall geringer ist als bei einer Lagerungsplattform mit größerem Seitenverhältnis, z.B. bei L/B = 2 oder mehr. Die nutzbare Stellfläche wird gegenüber dem Stand der Technik durch die Erfindung in dem Maße vergrößert, in dem in der Draufsicht zwischen in Längs- oder Querrichtung benachbarten Gestellstreben befindliche, streifenförmige Flächenbereiche unterschiedlich groß sind und entweder zur nutzbaren Stellfläche gehören oder nicht, wobei hier auch die Querschnittsform (quadratisch oder rechteckig-länglich) der Gestellstreben einer Rolle spielt.

### Bezugszeichenliste

- 1: Lagerungsplattform
- 3: Boden
- 5: Seitenwand
- 7: Öffnung
- 9: Überlauf
- 11: Ableitelement (Schlauch)
- 13: Endabschnitt
- 14: Erweiterungselement (Messingring)
- 15: Halterungsmittel (Haken)
- 17: Bewässerungsvorrichtung
- 21: Gestellstrebe
- 23: Gestell

- 101: Lagerungsplattform
- 103: Boden
- 105: Seitenwand
- 106a: Schmalseite
- 106b: Längsseite
- 106c: gerader Abschnitt
- 107: Öffnung
- 109: Überlauf (Ableitelement)
- 110: zylindrischer Grundkörper
- 111: Bodenwand
- 112: Abflußöffnung
- 113: Längsachse
- 114: Rastmittel/Markierung
- 116: oberer Rand
- 117: Bewässerungsvorrichtung
- 118: Anschlag
- 119: Absatz
- 120: Ecke (von 101)
- 124: Erweiterung
- 126: Längsachse (von 101)
- 130: Halterungselement
- 132: Halteschenkel
- 134: Einhängeschenkel
- 136: Ausnehmung

- 202: Lagerungsplattform
- 203: Boden
- 220: Ecke
- 217: Bewässerungsvorrichtung
- 221: Gestellstrebe
- 222: Schenkelabschnitt
- 223: Stegabschnitt
- 225: Einhängeschlitz (Einhängeausnehmung)
- 250: Rolle
- 260: Aufnahmemittel
- 261: Anschlag

- h: Pegel
- L: Länge innen (von 101, 201)
- La: Länge außen (von 101, 201)
- l: lichter Abstand (von 221)

## Patentansprüche

1. Lagerungsplattform (1, 101) zum Lagern, Bewässern und Transportieren von Pflanzen, wobei die Lagerungsplattform (1, 101) wannenartig ausgebildet ist und mindestens einen Überlauf (9, 109) zum Vorgeben eines gewünschten Flüssigkeitspegels aufweist, **dadurch gekennzeichnet, daß** die Lagerungsplattform (1, 101) im wesentlichen rechteckig ist und einen Boden (3, 103) und entlang des Bodens verlaufende Seitenwände (5, 105) aufweist, wobei der Boden (3, 103) im Bereich einer Schmalseite (106a) einen über eine Rechteckseite vorstehende Erweiterung (124) aufweist, innerhalb der der Überlauf (9, 109) angeordnet ist.

2. Lagerungsplattform (1, 101) nach Anspruch 1, **dadurch gekennzeichnet, daß** der Überlauf (9, 109) zum Einstellen eines gewünschten Flüssigkeitspegels stufenlos oder stufenweise höhenverstellbar ist.

3. Lagerungsplattform (1, 101) nach einem der vorangehenden Ansprüche, **dadurch gekennzeichnet, daß** der Überlauf (9, 109) ein rohrförmiges Ableitelement (11, 109) aufweist, das fest oder höhenverstellbar in einer Öffnung (7, 107) in der Lagerungsplattform (1, 101) gehalten ist.

4. Lagerungsplattform (1, 101) nach Anspruch 3, **dadurch gekennzeichnet, daß** das Ableitelement (11, 109) stufenweise oder stufenlos höhenverstellbar ist.

5. Lagerungsplattform (101) nach Anspruch 4, **dadurch gekennzeichnet, daß** das Ableitelement (109) optische Markierungen und/oder mechanische Rastmittel (114) in vorbestimmten Positionen aufweist.

6. Lagerungsplattform (101) nach einem der Ansprüche 3 bis 5, **dadurch gekennzeichnet, daß** das Ableitelement (109) mindestens eine seitlich gerichtete Ausflußöffnung (112) aufweist.

7. Lagerungsplattform (101) nach Anspruch 6, **dadurch gekennzeichnet, daß** das Ableitelement (109) drehbar in der Öffnung (107) gehalten ist.

8. Lagerungsplattform (1) nach Anspruch 3, **dadurch gekennzeichnet, daß** der Überlauf (9) einen Schlauch (11) aus einem elastischen Material aufweist, dessen Außendurchmesser größer als der Durchmesser der Öffnung (7) ist.

9. Lagerungsplattform (1) nach Anspruch 8, **dadurch gekennzeichnet, daß** der Schlauch (11) sich zu seinem den Überlauf (9) bildenden Endabschnitt (13) hin erweitert.

10. Lagerungsplattform (1) nach Anspruch 9, **dadurch gekennzeichnet, daß** in den Endabschnitt (13) ein Erweiterungselement (14), insbesondere ein Erweiterungsring (14), eingesetzt ist.

11. Lagerungsplattform (1) nach Anspruch 1, **dadurch gekennzeichnet, daß** zur Bildung des Überlaufs einer Öffnung in einer Seitenwand (5) der Lagerungsplattform (1) ein höhenverstellbares Schiebeelement zugeordnet ist.

12. Lagerungsplattform (1) nach einem der vorhergehenden Ansprüche, **dadurch gekennzeichnet, daß** die Lagerungsplattform (1) Halterungsmittel (15) wie Haken, Ösen, vorstehende Stifte oder Schienen zum Anbringen an einer Trageinrichtung (23), insbesondere an Streben (21) eines Gestells (23), Regals oder Transportwagens, aufweist.

13. Lagerungsplattform (101) nach einem der vorangehenden Ansprüche, **dadurch gekennzeichnet, daß** die Lagerungsplattform rechteckig ist und an zwei parallelen Schmalseiten (106a) jeweils zwei Halterungselemente (130) zum Einhängen in Gestellstreben (221) aufweist, wobei jedes Halterungselement (130) einen entlang der jeweiligen Schmalseite (106a) verlaufenden und in Richtung einer jeweils zunächst liegenden Längsseite (106b) frei endenden Eingriffs-Endabschnitt (134) aufweist.

14. Lagerungsplattform nach Anspruch 13, **dadurch gekennzeichnet, daß** die Eingriffs-Endabschnitte (134) der Halterungselemente (130) jeweils in einem Eckbereich (108) der Lagerungsplattform (101) angeordnet sind.

15. Lagerungsplattform nach Anspruch 13 oder 14, **dadurch gekennzeichnet, daß** die Halterungselemente (130) L-förmig ausgebildet sind und einen Halteschenkel (132) und einen den Eingriffs-Endabschnitt bildenden Einhängeschenkel (134) aufweisen.

16. Lagerungsplattform nach Anspruch 15, **dadurch gekennzeichnet, daß** die Halteschenkel (132) an einer Seitenwand (105) befestigt sind.

17. Lagerungsplattform nach einem der Ansprüche 13 bis 16, **dadurch gekennzeichnet, daß** die Eingriffs-Endabschnitte (134) eine Ausnehmung (136) zum formschlüssigen Einhängen in Gestellstreben (221) aufweisen.

18. Lagerungsplattform nach einem der Ansprüche 13 bis 16, **dadurch gekennzeichnet, daß** die Schmalseiten (106a) zwischen den Halterungselementen (130) jeweils mit der Erweiterung (124) versehen sind, innerhalb der jeweils ein Überlauf (109) angeordnet ist.

19. Lagerungsplattform nach einem der vorangehenden Ansprüche, **dadurch gekennzeichnet, daß** die Lagerungsplattform an einer Unterseite mit Rollen (250) versehen ist.

20. Lagerungsplattform (201) nach einem der vorangehenden Ansprüche, **dadurch gekennzeichnet, daß** die Lagerungsplattform als unterste Lagerungsplattform einer Bewässerungsvorrichtung ausgebildet ist, rechteckig ist und in jedem Eckbereich (208) mit einem Aufnahmemittel (260) für eine Gestellstrebe (221) versehen ist.

21. Bewässerungsvorrichtung (17) zum Lagern, Bewässern und Transportieren von Pflanzen, mit mindestens zwei übereinander angeordneten Lagerungsplattformen (101, 201) nach einem der Ansprüche 1 bis 21, wobei die Lagerungsplattformen so angeordnet sind, daß eine über den Überlauf (11, 109) einer (jeder) Lagerungsplattform ablaufende Flüssigkeit in eine darunter, insbesondere zunächst benachbart angeordnete Lagerungsplattform fließen kann.

22. Bewässerungsvorrichtung (17) nach Anspruch 21, soweit rückbezogen auf einen der Ansprüche 3 bis 10, **dadurch gekennzeichnet, daß** die Lagerungsplattformen (1) so angeordnet sind, daß das rohrförmige Ableitelement (10) einer (jeder) oberen Lagerungsplattfonn (1) bis auf einen Boden (3) einer darunter, insbesondere zunächst benachbart, angeordneten Lagerungsplattform (1) reicht.

23. Bewässerungsvorrichtung (17) nach einem der Ansprüche 21 oder 22, **dadurch gekennzeichnet, daß** eine (jede) Lagerungsplattform (1) unmittelbar auf einer darunter angeordneten Lagerungsplattform (1) lagert.

24. Bewässerungsvorrichtung (17) nach einem der Ansprüche 21 oder 22, **dadurch gekennzeichnet, daß** die Bewässerungsvorrichtung (17) eine Trageinrichtung (23), insbesondere ein Gestell (23), Regal oder Rollwagen, aufweist.

25. Bewässerungsvorrichtung (17) nach Anspruch 24, **dadurch gekennzeichnet, daß** die Trageinrichtung (23) Halterungsmittel wie Ausnehmungen, Bohrungen, Schlitze, Haken, Ösen, vorstehende Stifte oder Schienen zum Anbringen von Lagerungsplattformen (1) aufweist.

26. Bewässerungsvorrichtung (17) nach einem der Ansprüche 21 bis 25, **dadurch gekennzeichnet, daß** die Lagerungsplattformen (1) fächerförmig oder in Form einer Pyramide angeordnet sind.

27. Bewässerungsvorrichtung (117) nach Anspruch 24 oder 25, mit mindestens zwei Lagerungsplattformen (101, 201) nach einem der Ansprüche 14 bis 21, **dadurch gekennzeichnet, daß** Gestellstreben (221) jeweils mindestens eine Einhängeausnehmung (225) zum Einhängen der Eingriffs-Endabschnitte (134) aufweisen, wobei die Einhängeausnehmungen (225) von jeweils einer Schmalseite (106a) der Lagerungsplattformen (101) zugeordneten Gestellstreben (221) einander zugekehrt sind.

28. Bewässerungsvorrichtung (117) nach Anspruch 27, **dadurch gekennzeichnet, daß** die Gestellstreben (221) L-, U- oder Rechteckprofile sind.

## Claims

1. Storage tray (1, 101) for storing, watering and transporting plants, the storage tray (1, 101) being of trough-like design and having at least one overflow (9, 109) for predetermining a desired liquid level, **characterized in that** the storage tray (1, 101) is essentially rectangular and has a base (3, 103) and side walls (5, 105) running along the base, the base (3, 103) having, in the region of a narrow side (106a), a widened portion (124) which projects beyond a side of the rectangle and within which the overflow (9, 109) is arranged.

2. Storage tray (1, 101) according to Claim 1, **characterized in that**, in order to set a desired liquid level, the overflow (9, 109) can be height-adjusted in a stepless or stepwise manner.

3. Storage tray (1, 101) according to one of the preceding claims, **characterized in that** the overflow (9, 109) has a tubular drainage element (11, 109) which is retained in a fixed or height-adjustable manner in an opening (7, 107) in the storage tray (1, 101).

4. Storage tray (1, 101) according to Claim 3, **characterized in that** the drainage element (11, 109) can be height-adjusted in a stepwise or a stepless manner.

5. Storage tray (101) according to Claim 4, **characterized in that** the drainage element (109) has optical markings and/or mechanical latching means (114) in predetermined positions.

6. Storage tray (101) according to one of Claims 3 to 5, **characterized in that** the drainage element (109) has at least one laterally directed outflow opening (112).

7. Storage tray (101) according to Claim 6, **characterized in that** the drainage element (109) is retained in a rotatable manner in the opening (107).

8. Storage tray (1) according to Claim 3, **characterized in that** the overflow (9) has a hose (11) which is made of an elastic material and of which the external diameter is larger than the diameter of the opening (7).

9. Storage tray (1) according to Claim 8, **characterized in that** the hose (11) widens in the direction of its end section (13) which forms the overflow (9).

10. Storage tray (1) according to Claim 9, **characterized in that** a widening element (14), in particular a widening ring (14), is inserted into the end section (13).

11. Storage tray (1) according to Claim 1, **characterized in that**, in order to form the overflow, a height-adjustable sliding element is assigned to an opening in a side wall (5) of the storage tray (1).

12. Storage tray (1) according to one of the preceding claims, **characterized in that** the storage tray (1) has securing means (15), such as hooks, eyelets, projecting pins or rails, for attachment to a carrying means (23), in particular to struts (21) of a framework (23), rack or transporting carriage.

13. Storage tray (101) according to one of the preceding claims, **characterized in that** the storage tray is rectangular and, on two parallel narrow sides (106a), has in each case two securing elements (130) for mounting in framework struts (221), each securing element (130) having an engagement end section (134) which runs along the respective narrow side (106a) and terminates freely in the direction of a respectively adjacent longitudinal side (106b).

14. Storage tray according to Claim 13, **characterized in that** the engagement end sections (134) of the securing elements (130) are arranged in each case in a corner region (108) of the storage tray (101).

15. Storage tray according to Claim 13 or 14, **characterized in that** the securing elements (130) are of L-shaped design and have a retaining leg (132) and a mounting leg (134) which forms the engagement end section.

16. Storage tray according to Claim 15, **characterized in that** the retaining legs (132) are fastened on a side wall (105).

17. Storage tray according to one of Claims 13 to 16, **characterized in that** the engagement end sections (134) have a recess (136) for form-fitting mounting in framework struts (221).

18. Storage tray according to one of Claims 13 to 16, **characterized in that** the narrow sides (106a), between the securing elements (130), are each provided with the widened portion (124) within which a respective overflow (109) is arranged.

19. Storage tray according to one of the preceding claims, **characterized in that** the storage tray is provided with rollers (250) on an underside.

20. Storage tray (201) according to one of the preceding claims, **characterized in that** the storage tray is designed as the lowermost storage tray of a watering arrangement, is rectangular and, in each corner region (208), is provided with an accommodating means (260) for a framework strut (221).

21. Watering arrangement (17) for storing, watering and transporting plants, having at least two storage trays (101, 201) according to one of Claims 1 to 20 arranged one above the other, the storage trays being arranged such that a liquid which runs off via the overflow (11, 109) of a (each) storage tray can flow into a storage tray arranged beneath, in particular an adjacent storage tray.

22. Watering arrangement (17) according to Claim 21, to the extent where it is referred back to one of Claims 3 to 10, **characterized in that** the storage trays (1) are arranged such that the tubular drainage element (11) of a (each) upper storage tray (1) extends to a base (3) of a storage tray (1) arranged beneath, in particular an adjacent storage tray (1).

23. Watering arrangement (17) according to either of Claims 21 and 22, **characterized in that** a (each) storage tray (1) is borne directly on a storage tray (1) arranged beneath.

24. Watering arrangement (17) according to either of Claims 21 and 22, **characterized in that** the watering arrangement (17) has a carrying means (23), in particular a framework (23), rack or rolling carriage.

25. Watering arrangement (17) according to Claim 24, **characterized in that** the carrying means (23) has securing means such as recesses, bores, slots, hooks, eyelets, projecting pins or rails for the attachment of storage trays (1).

26. Watering arrangement (17) according to one of Claims 21 to 25, **characterized in that** the storage trays (1) are arranged in a fan-like manner or in the form of a pyramid.

27. Watering arrangement (117) according to Claim 24 or 25, having at least two storage trays (101, 201) according to one of Claims 14 to 20, **characterized in that** framework struts (221) have in each case at least one mounting recess (225) for mounting the engagement end sections (134), the mounting recesses (225) of framework struts (221) assigned to a respective narrow side (106a) of the storage trays (101) being directed towards one another.

28. Watering arrangement (117) according to Claim 27, **characterized in that** the framework struts (221) are L-shaped, U-shaped or rectangular profiles.

## Revendications

1. Palette de stockage (1, 101) pour le stockage, l'irrigation et le transport de plantes, la palette de stockage (1, 101) étant conformée en forme de bac et présente au moins un déversoir (9, 109) pour prédéterminer un niveau de liquide souhaité, **caractérisée en ce que** la palette de stockage (1, 101) est sensiblement rectangulaire et présente un fond (3, 103) et des parois latérales (5, 105) s'étendant le long du fond, le fond (3, 103) présentant, dans la zone d'un côté étroit (106a), un élargissement (124) en saillie sur un côté du rectangle, élargissement à l'intérieur duquel le déversoir (9, 109) est disposé.

2. Palette de stockage (1, 101) selon la revendication 1, **caractérisée en ce que** le déversoir (9, 109) est réglable en hauteur, de façon progressive continue, ou par échelons, pour régler un niveau de liquide souhaité.

3. Palette de stockage (1, 101) selon l'une des revendications précédentes, **caractérisée en ce que** le déversoir (9, 109) présente un élément de dérivation (11, 109) tubulaire, maintenu rigidement ou de façon réglable en hauteur dans une ouverture (7, 107) ménagée dans la palette de stockage (1, 101).

4. Palette de stockage (1, 101) selon la revendication 3, **caractérisée en ce que** l'élément de dérivation (11, 109) est réglable en hauteur, par échelons ou de façon progressive continue.

5. Palette de stockage (101) selon la revendication 4, **caractérisée en ce que** l'élément de dérivation (109) présente des marquages optiques et/ou des moyens d'encliquetage mécanique (114) à des positions prédéterminées.

6. Palette de stockage (101) selon l'une des revendications 3 à 5, **caractérisée en ce que** l'élément de dérivation (109) présente au moins une ouverture d'évacuation (112) orientée latéralement.

7. Palette de stockage (101) selon la revendication 6, **caractérisée en ce que** l'élément de dérivation (109) est maintenu de façon à pouvoir tourner dans l'ouverture (107).

8. Palette de stockage (1) selon la revendication 3, **caractérisée en ce que** le déversoir (9) présente un tuyau (11) formé d'un matériau élastique, dont le diamètre extérieur est supérieur au diamètre de l'ouverture (7).

9. Palette de stockage (1) selon la revendication 8, **caractérisée en ce que** le tuyau (11) s'élargit en un tronçon d'extrémité (13) formant le déversoir (9).

10. Palette de stockage (1) selon la revendication 9, **caractérisée en ce qu'**un élément d'élargissement (14), en particulier, un anneau d'élargissement (14), est inséré dans le tronçon d'extrémité (13).

11. Palette de stockage (1) selon la revendication 1, **caractérisée en ce qu'**un élément coulissant réglable en hauteur est associé à une ouverture, ménagée dans une paroi latérale (5) de la palette de stockage (1), pour former le déversoir.

12. Palette de stockage (1) selon l'une des revendication précédentes, **caractérisée en ce que** la palette de stockage (1) présente des moyens de fixation (15), tels que des crochets, des oeillets, des tiges en saillie ou des glissières pour montage, sur un dispositif support (23), en particulier sur des entretoises (21) d'un bâti (23), d'une étagère ou d'un chariot de transport.

13. Palette de stockage (101) selon l'une des revendications précédentes, **caractérisée en ce que** la palette de stockage est rectangulaire et présente, sur deux côtés étroits (106a) parallèles, chaque fois deux éléments de fixation (130) pour accrochage dans des entretoises de bâti (221), chaque élément de fixation (130) présentant un tronçon d'extrémité d'engagement (134) à extrémité libre, s'étendant le long du côté étroit (106a) respectif et dans la direction d'un côté long (106b) chaque fois d'abord horizontal.

14. Palette de stockage selon la revendication 13, **caractérisée en ce que** les tronçons d'extrémité d'engagement (134) des éléments de fixation (130) sont chacun disposés dans une zone d'angle (108) de la palette de stockage (101).

15. Palette de stockage selon la revendication 13 ou 14, **caractérisée en ce que** les éléments de fixation (130) sont conformés en L et présentent une branche de maintien (132) et une branche d'accrochage (134) formant le tronçon d'extrémité d'engagement.

16. Palette de stockage selon la revendication 15, **caractérisée en ce que** les branches de maintien (132) sont fixées sur une paroi latérale (105).

17. Palette de stockage selon l'une des revendications 13 à 16, **caractérisée en ce que** les tronçons d'extrémité d'engagement (134) présentent un évidement (136) pour accrochage avec liaison à ajustement de forme dans des entretoises de bâti (221).

18. Palette de stockage selon l'une des revendications 13 à 16, **caractérisée en ce que** les côtés étroits (106a) sont munis entre les éléments de fixation (130) chaque fois de l'élargissement (124) à l'intérieur duquel est chaque fois disposé un déversoir (109).

19. Palette de stockage selon l'une des revendications précédentes, **caractérisée en ce que** la palette de stockage est munie de roulettes (250) en une face inférieure.

20. Palette de stockage selon l'une des revendications précédentes, **caractérisée en ce que** la palette de stockage est réalisée en tant que palette de stockage en position la plus basse d'un dispositif d'irrigation, est de forme rectangulaire et est munie, dans chaque zone d'angle (208), de moyens de logement (260) pour une entretoise de bâti (221).

21. Dispositif d'irrigation (17) pour le stockage, l'irrigation et le transport de plantes, comprenant au moins deux palettes de stockage (101, 201) disposées l'une au-dessus de l'autre selon l'une des revendications 1 à 21, les palettes de stockage étant disposées de manière qu'un liquide, s'échappant par le déversoir (11, 109) d'une (de chaque) palette de stockage, puisse s'écouler dans une palette de stockage sous-jacente, en particulier disposée de façon voisine et la première.

22. Dispositif d'irrigation (17) selon la revendication 21, dans la mesure où l'on se réfère à l'une des revendications 3 à 10, **caractérisé en ce que** les palettes de stockage (1) sont disposées de manière que l'élément d'évacuation (10) tubulaire d'une (de chaque) palette de stockage (1) supérieure arrive jusqu'à un fond (3) d'une palette de stockage (1) sous-jacente, en particulier la palette voisine immédiatement la première.

23. Dispositif d'irrigation (17) selon l'une des revendications 21 ou 22, **caractérisé en ce qu'**une (chaque) palette de stockage (1) se monte directement sur une palette de stockage (1) sous-jacente.

24. Dispositif d'irrigation (17) selon l'une des revendications 21 ou 22, **caractérisé en ce que** le dispositif d'irrigation (17) présente un dispositif support (23), en particulier un bâti (23), une étagère ou un chariot roulant.

25. Dispositif d'irrigation (17) selon la revendication 24, **caractérisé en ce que** le dispositif support (23) présente des moyens de fixation tels que des évidements, des perçages, des fentes, des crochets, des oeillets, des tiges en saillie ou des glissières, pour montage de palettes de stockage (1).

26. Dispositif d'irrigation (17) selon l'une des revendications 21 à 25, **caractérisé en ce que** les plateformes de stockage (1) sont disposées en forme d'éventail ou en forme de pyramide.

27. Dispositif d'irrigation (117) selon la revendication 24 ou 25, avec au moins deux palettes de stockage (101, 102) selon l'une des revendications 14 à 21, **caractérisé en ce que** des entretoises de bâti (221) présentent chacune au moins un évidement d'accrochage (225) pour accrochage des tronçons d'extrémité d'engagement (134), les évidements d'accrochage (225) d'entretoises de bâti (221), associées chacune à un côté étroit (106a) des palettes de stockage (101), étant tournés les uns vers les autres.

28. Dispositif d'irrigation (117) selon la revendication 27, **caractérisé en ce que** les entretoises de bâti (221) ont des profils en forme de L, de U ou rectangulaires.
